Europäisches Patentamt

European Patent Office   (11) Publication number:   **0 036 149**

Office européen des brevets   **A2**

(19)

(12) **EUROPEAN PATENT APPLICATION**

(21) Application number: **81101659.1**

(22) Date of filing: **06.03.81**

(51) Int. Cl.³: **G 06 K 9/32**
**B 07 C 3/14**

(30) Priority: **14.03.80 JP 32300/80**

(43) Date of publication of application:
**23.09.81 Bulletin 81/38**

(84) Designated Contracting States:
**DE FR GB IT**

(71) Applicant: **TOKYO SHIBAURA DENKI KABUSHIKI KAISHA**
**72, Horikawa-cho Saiwai-ku**
**Kawasaki-shi Kanagawa-ken 210(JP)**

(72) Inventor: **Kizu, Shuji**
**9-209, Nobajutaku 628 Noba-cho**
**Konan-ku Yokohama-shi(JP)**

(72) Inventor: **Ikeda, Tsutomu**
**4-26-10, Higashinippori Arakawa-ku**
**Tokyo(JP)**

(72) Inventor: **Iwamoto, Masanori**
**5-9-13, Daizawa Setagaya-ku**
**Tokyo(JP)**

(74) Representative: **Patentanwälte**
**Henkel-Kern-Feiler-Hänzel**
**Möhlstrasse 37**
**D-8000 München 80(DE)**

(54) **Character optical reader.**

(57) The image of whole surface of a mail matter (12) is roughly scanned by a first scanner (13). The position of character area of the mail matter (12) is detected by the image signals of the first scanner (13). The image of the character area detected is optically picked up by a galvanometer (32) to project to a second scanner (39) and closely scanned by the second scanner (39) and a character recognition circuit (40) serves to recognize characters in the character area by character signals of the second scanner (39).

EP 0 036 149 A2

FIG. 1

Croydon Printing Company Ltd.

- 1 -

Character optical reader

The present invention relates to a character optical reader and, mmore particularly, a character optical reader capable of reading the zip number of a mail matter.

According to conventional character optical readers capable of reading the postal code of main matter, first and second reading means are arranged along the carrying direction on the mail matter carrying passage, and the area in which characters are put down on the mail matter or envelope is determined by image signals of first reading means. Responsive to the result thus obtained, the second reading means sets the area to be read and reads characters. It becomes necessary to use a scanner having a high scanning frequency for the purpose of enabling the scanner of first reading means to scan a large scanning area. When the scanning frequency becomes high, the signal processing circuit must be of high frequency band type, thus making it necessary to use expensive electrical elements such as IC and transistor, which are intended for high frequency, and making the cost high. However, the use of scanners having a low scanning frequency makes the resolution of reading means low.

The object of the present invention is to provide a character optical reader in which the resolution of character detection reading means is not degraded with no scanner having high scanning frequency employed in a character area detection reading means.

According to the present invention, a character optical reader is provided in which a scanner of character area detection reading means scans the whole surface of a mail matter with roughly-spaced scanning lines, a character area detection circuit detects the character area of mail matter responsive to output signals of scanner, and a scanner of character detection reading means is limited, responsive to detection signals of character area detection circuit, to scan the character area with closely-spaced scanning lines.

This invention can be more fully understood from the following detailed description when taken in conjunction with the accompanying drawings, in which:

Fig. 1 is a schematic view of a character optical reader according to an embodiment of the present invention;

Fig. 2 is a block diagram of a character area detection circuit employed in the character optical reader shown in Fig. 1;

Fig. 3 is a plan view of a mail matter;

Fig. 4 is a plan view of a mail matter which is scanned by a character area detection scanner; and

Fig. 5 is a plan view of a mail matter which is scanned by a character detection scanner.

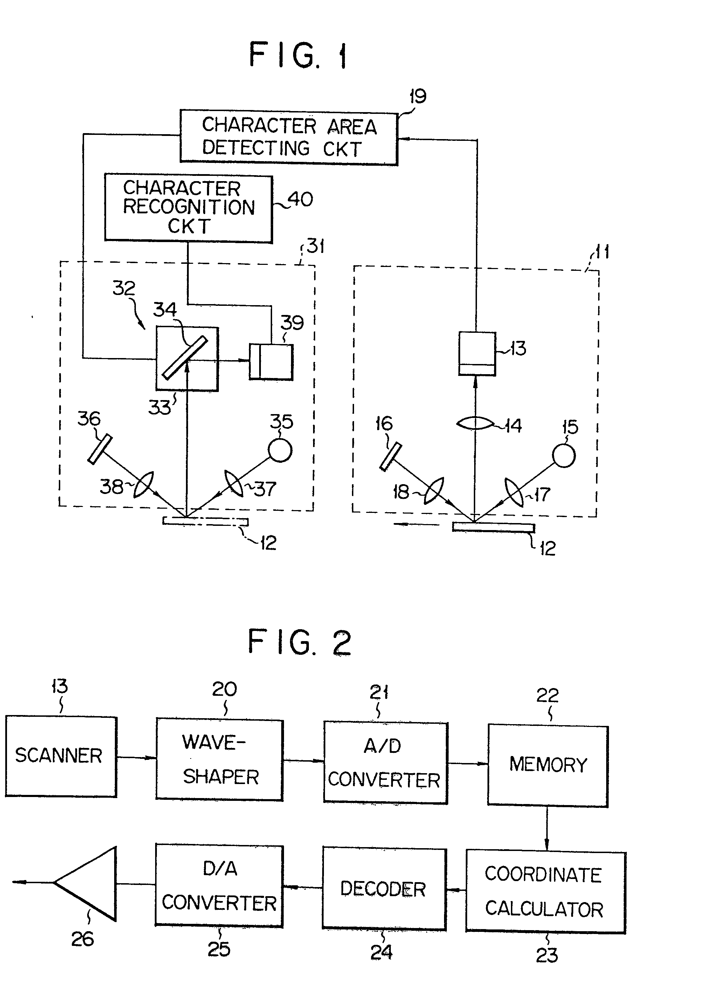

As shown in Fig. 1, a scanner 13 is arranged opposite to a mail matter 12 through a focussing lens 14 in a first reading device 11 for reading the character area 41 of mail matter. A lamp 15 and a reflector 16 for lighting the mail matter 12 are arranged in such a way that light is condensed on the mail matter 12 through condenser lenses 17 and 18. The scanner 13 is a self-scanned image sensor comprising a charge-coupled device (or CCD), for example. The output of scanner 13 is connected to the input of a character area detecting circuit 19. As shown in Fig. 2, a wave shaper 20 is arranged in the character area detecting circuit 19, the wave shaper 20 serving to wave-shape signals of scanner 13. The output of the wave shaper 20 is connected via an A/D converter 21 to the write-in port of a memory 22. The readout port of memory 22 is connected to the input of a coordinate calculator 23, whose output is connected via a decoder 24 and a D/A converter 25 to an amplifier 26. The output of amplifier 26 is connected to a driver circuit 33 for a galvanometer 32 of a second reading device 31. The galvanometer 32 is adapted to move a mirror 34 by amount corresponding to the output signal level of character area detecting circuit 19 and to control the area in which the mail matter 12 is scanned by a scanner 39. In the case of second reading device 31, the mail matter 12 is lighted by the light emitted from a lamp 35, reflected by a reflector 36 and condensed through condenser lenses 37 and 38. The output of scanner 39 is connected to a character recognition circuit 40, which may be of usual type.

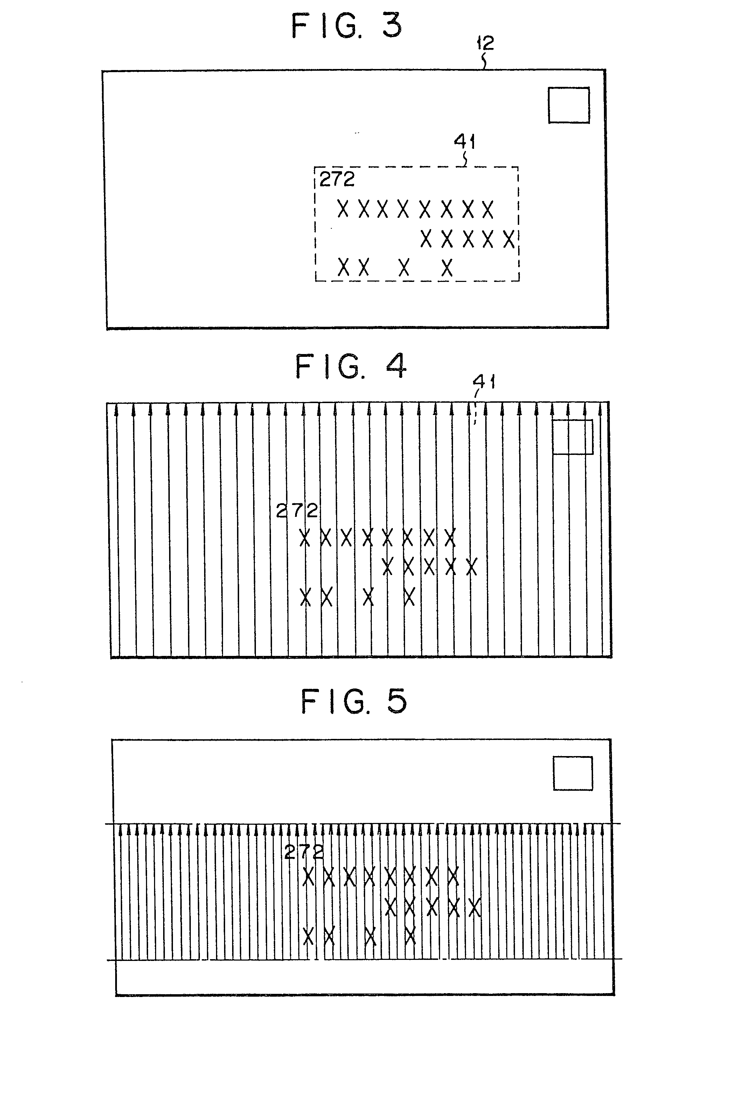

With the character optical reader thus obtained, the mail matter or mail envelope 12 shown in Fig. 3 is carried standing on the mail matter feeding passage of first reading device 11 shown in Fig. 1 and in the direction shown by an arrow, and scanned on the whole surface thereof by the scanner 13. Since the first reading device 11 may detect the character area 41 on the mail envelope 12, the whole surface of mail envelope 12 is scanned by roughly-spaced scanning lines as shown in Fig. 4. Namely, the scanner 13 is formed by a small number of CCDs arrayed, and driven by a scanning signal having a low scanning frequency. Output signals of scanner 13 are wave-shaped by the wave shaper 20 and converted to digital signals by the A/D converter 21 shown in Fig. 2. Digital signals of A/D converter 21 are stored by the memory 22. The coordinate calculator 23 serves to calculate the coordinates of character area 41 on the mail envelope 12 using data read out of memory 22. The calculation of coordinates is achieved as follows, for example: When data are read out of memory 22, numbers of bit "0" are counted until the number of bit corresponding to a first-appearing character becomes "1", and the tip of character area 41 can be calculated by these counted values. The width of character area 41 is obtained by numbers of bit "1" counted in the scanning direction and the length thereof by counting numbers of bit "1" in the direction perpendicular to the scanning direction. Calculating results obtained by the coordinate calculator 23 are decoded by the decoder 24 and converted to analog signals by the D/A converter 25. Output signals of D/A converter 25 are amplified by the amplifier 26 and applied to the drive circuit 33 of the galvanometer 32, which serves to move the mirror 34 by amount corresponding to the level of signals applied from the amplifier 26, to detect the character area of the mail envelope 12 carried from the first reading device 11 to the second one 31, and to project the image of character area to the scanner 39 of the second reading device 31. The scanner 39 scans the image of character area with closely spaced scanning lines, as shown in Fig. 5, so as to enhance the resolution of characters. Namely, the scanner 39 has a resolution several times that of scanner 13. Output signals of scanner 39 are applied to the character recognition circuit 40, which recognizes characters on the mail envelope 12. This character recognition is practically applied only to the postal code 42, and therefore, information relating to other characters may be removed.

According to the present invention as described above, the whole surface of mail matter is scanned by the scanner with roughly-spaced scanning lines and the character area of mail matter is detected by the image data of the scanner in the process of character area detection, while the detected character area is picked up by a galvanometer and scanned with closely-spaced scanning lines in the process of character recognition, so that neither high frequency scanner having a large number of bits nor high frequency processing circuit are needed as the character area detecting means, thus enabling the arrangement of character area reading device to be simplified and the cost to be reduced. In addition, a scanner having a small scanning area can be used without degrading the resolution thereof in the character recognition device because the limited character area to be scanned may be substantially smaller than the whole surface of mail matter.

Claims:

1. A character optical reader comprising:

a first scanner for roughly scanning the whole surface of a mail matter (12) having a character area (41) in which characters including at least a postal code are put down, and producing image signals;

a character area detecting means (19) for detecting the position of said character area (41) by the image signals applied from said first scanner (13) to produce detection signals;

a galvanometer (32) driven by detection signals of said character area detecting means (19) to optically pick up the image of said character area (41) and project to a second scanner (39);

said second scanner (39) closely scanning the image of said character area picked up by said galvanometer (32) to supply character signals; and

a character recognition means (40) for receiving character signals of said second scanner to recognize some of characters put down on the character area.

2. A character optical reader according to claim 1, wherein said character optical reader serves to recognize the postal code.

0036149

# FIG. 1

# FIG. 2

0036149

## FIG. 3

12

41

272

X X X X X X X
X X X X
X X   X   X

## FIG. 4

41

272

X X X X X X X X
X X X X
X X   X   X

## FIG. 5

272

X X X X X X X X
X X X X
X X   X   X